# EUROPEAN PATENT APPLICATION

(11) **EP 3 097 822 A1**
(43) Date of publication of application: **30.11.2016**
(21) Application number: 15169285.2
(22) Date of filing: 26.05.2015
(51) Int. Cl.: A47B 13/02, F16B 12/30, F16B 12/40, F16B 7/18

(54) **CONNECTOR FOR CONNECTING AT LEAST THREE ELONGATE ELEMENTS IN A CROSS-LIKE CONFIGURATION**

(71) Applicant: Hartman Enterprises B.V., 7521 BE Enschede (NL)
(72) Inventor: Ockeloen, Robert, 7521 BE Enschede (NL)
(74) Representative: 't Jong, Bastiaan Jacob

(57) **Abstract**

The invention relates to a connector for connecting at least three elongate elements in a cross-like configuration, which connector comprises:
- a main body having a first through hole and a locking hole extending under an angle, preferably perpendicular, to and at least into the first through hole;
- a first connector body having a bushing arranged with one end to the first connector body and which busing is positioned into a first end of the through hole;
- a second connector body having an axle journal arranged with one end to the second connector body, which axle journal is positioned into a second end of the through hole and extends into the bushing;
- a locking pin arranged in the locking hole and extending through the bushing and the axle journal.

## Description

The invention relates to a connector for connecting at least three elongate elements in a cross-like configuration.

In some constructions it is desired to connect elongate elements, such as rods or tubes, in a cross-like configuration. The cross-like configuration provides a shape, in which the elongate elements seem to intersect.

Such a construction with a cross-like configuration is for example known for table top supports. In order to transport such a cross-like table top support it is desired that the support can be disassembled and that the number of parts is limited.

It could be imagined that a cross-like connector with connections for tubes is welded as a single piece. However, each tube needs to be separately fixed to the connector, for example with bolt and nut, which increases the number of parts considerably, especially as a cross-like table top support typically has at least three or four legs and three or four supports. Such that at least six to eight tubes need to be fixed to the connector.

DE 102013100306 discloses a table top support with a cross-like configuration. Four beams are provided at the middle with complicated cutouts, such that the beams can be put together as a puzzle. This is in particular for a layman difficult to assemble.

US 2759780 discloses a table top support also with a cross-like configuration. A number of rods are put together like a wigwam skeleton, wherein the rods are kept together by a rope or band. According to this publication, an additional bolts is used to further strengthen the structure.

It is an object of the invention to reduce or even remove the above mentioned disadvantages.

This object is achieved according to the invention with a connector for connecting at least three elongate elements in a cross-like configuration, which connector comprises:
- a main body having a first through hole and a locking hole extending under an angle, preferably perpendicular, to and at least into the first through hole;
- a first connector body having a bushing arranged with one end to the first connector body and which busing is positioned into a first end of the through hole;
- a second connector body having an axle journal arranged with one end to the second connector body, which axle journal is positioned into a second end of the through hole and extends into the bushing;
- a locking pin arranged in the locking hole and extending through the bushing and the axle journal.

The connector according to the invention can easily be assembled simply by sliding the bushing into the through hole and by sliding the axle journal from the opposite side into the through hole into the bushing. Then only a single locking pin is sufficient to lock all the parts of the connector together.

So, with this connector according to the invention, the number of parts remains limited, while the body parts are available to arranged elongate elements to.

Preferably, at least one elongate element, such as a rod or tube, is arranged to each of the main body, the first connector body and the second connector body.

In a preferred embodiment of the connector according to the invention four elongate elements are arranged to the main body in a X-shape configuration, wherein the longitudinal axis of each elongate element is perpendicular to the axis of the through hole.

Due to the X-shape configuration, the main body has still four elements in a single plane, which is of advantage when these parts need to be transported.

Preferably, at least two elongate elements are arranged to each of the first and second connector bodies and wherein the elongate elements and the bushing and axle journal respectively are arranged in a single plane.

With the other two connector bodies also still virtually two dimensional or flat, a connector with elongate elements arranged thereto having a cross-like configuration in assembled state, can still be assembled in three flat parts, which can easily be packaged and shiped.

The invention furthermore relates to a table comprising:
- a table top;
- a connector according to the invention,
- four elongate table legs and four elongate frame rods for supporting the table top,
wherein two elongate table legs and two elongate frame rods are arranged to the main body of the connector in an X-shape configuration,
wherein one elongate table leg and one elongate frame rod are arranged to the first connector body in a V-shaped configuration and in a single plane with the bushing, and
wherein one elongate table leg and one elongate frame rod are arranged to the second connector body in a V-shaped configuration and in a single plate with the axle journal, such that the assembly of connector, elongate table legs and elongate frame rods provide an X-shaped support for the table top.

The table according to the invention has a cross-like table top support, in which the legs seem to intersect with each other, while the table can easily be disassembled by only removing the locking pin of the connector resulting in parts which are virtually two dimensional or flat, such that the table according to the invention can be packaged into a compact packaging.

These and other features of the invention will be elucidated in conjunction with the accompanying drawings.
Figure 1 shows a perspective view of a disassembled embodiment of a connector according to the invention.
Figure 2 shows a perspective view of the connector according to figure 1 with legs and supports.
Figure 3 shows the connector of figure 2 in assembled state and supporting a table top.

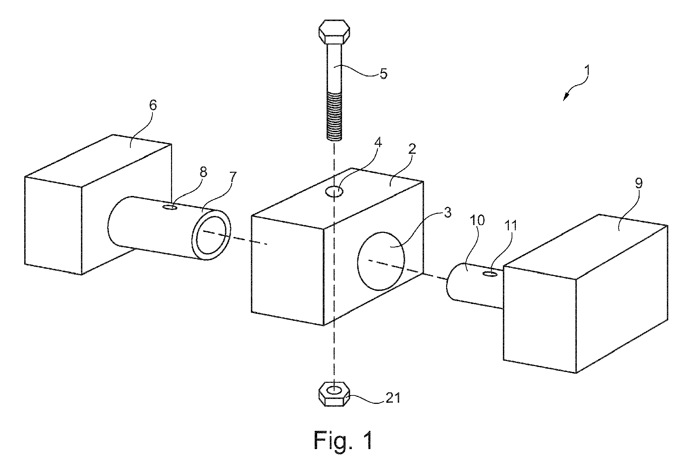

A connector 1 according to the invention is shown in figure 1.

The connector 1 has a main body 2 with a through hole 3 and a locking hole 4, being perpendicular to the through hole 3. A locking pin, embodied as a bolt 5 and nut 21 can be inserted into to the locking hole 4, such that the locking pin 5, 21 extends at least and preferably thorough the through hole 3.

The connector 1 has furthermore a first connector body 6 with a bushing 7 arranged to the body 6. The bushing 7 has also a locking hole 8, through which the bolt 5 can extend, when the bushing 7 is inserted into the through hole 3 of the main body 2.

The second connector body 9 has an axle journal 10 with also a locking hole 11. After the bushing 7 has been inserted into the through hole 3, the axle journal 10 can be inserted into the through hole 3 from the opposite side and into the inside of the bushing 7. Finally, bolt 5 is inserted into the locking hole 4, through the locking hole 8 of the bushing 7 and into the locking hole 11 of the axle journal 10. This connects the three body parts 2, 6, 9 together and prevents rotation of the body parts 2, 6, 9 relative to each other. The nut 21 is then screwed to the bolt 5 to clamp the body parts 2, 6, 9 fixed.

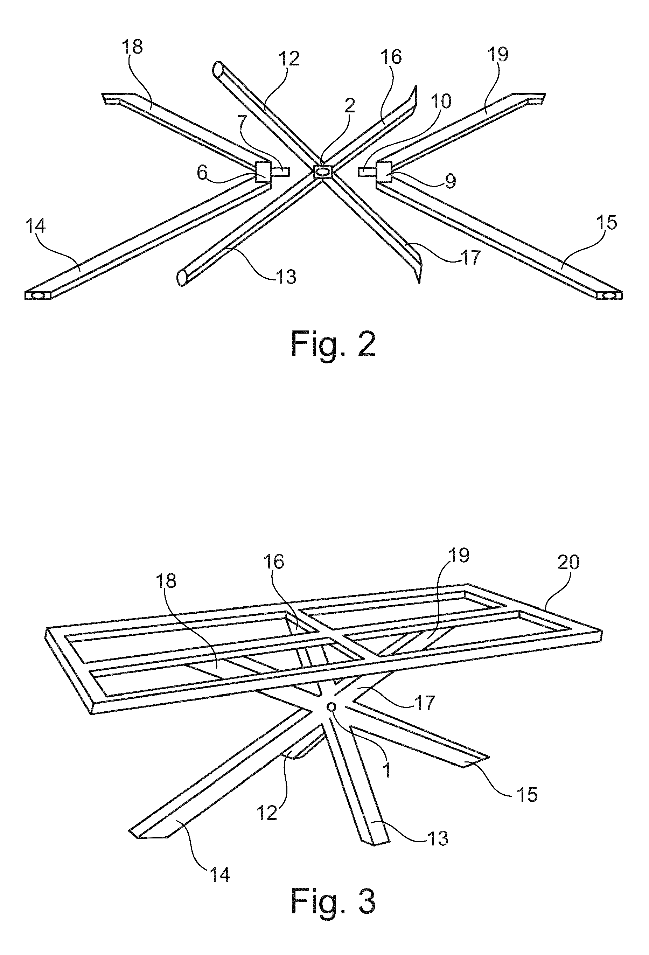

Figure 2 shows the connector 1 of figure 1 with four elongate legs 12, 13, 14, 15 and with four elongate supports 16, 17, 18, 19.

The main body 2 is provided with two legs 12, 13 and two supports 16, 17 in a X-shaped configuration. The longitudinal axis of each elongate element 12, 13, 16, 17 is perpendicular to the axis of the through hole 3. This results in a flat or virtual two dimensional structure.

The first connector body 6 is provided with one leg 14 and one support 18 in a V-shaped configuration. Also the second connector body 9 is provided with one leg 15 and one support 19 in a V-shaped configuration. These V-shaped configurations provide flat elements, such that all three parts can easily be packaged.

Figure 3 shows the connector 1 with the legs 12, 13, 14, 15 and the supports 16, 17, 18, 19 in assembled state. This results in support with a cross-like configuration to support a table top 20.

The legs 12, 13, 14, 15 and the supports 16, 17, 18, 19 are inline with each other and seem to intersect, although the table top support can easily be disassembled due to the connector 1 and by removing the locking pin 5.

## Claims

1. Connector for connecting at least three elongate elements in a cross-like configuration, which connector comprises:
- a main body having a first through hole and a locking hole extending under an angle, preferably perpendicular, to and at least into the first through hole;
- a first connector body having a bushing arranged with one end to the first connector body and which busing is positioned into a first end of the through hole;
- a second connector body having an axle journal arranged with one end to the second connector body, which axle journal is positioned into a second end of the through hole and extends into the bushing;
- a locking pin arranged in the locking hole and extending through the bushing and the axle journal.

2. Connector according to claim 1, wherein at least one elongate element, such as a rod or tube, is arranged to each of the main body, the first connector body and the second connector body.

3. Connector according to claim 2, wherein four elongate elements are arranged to the main body in a X-shape configuration, wherein the longitudinal axis of each elongate element is perpendicular to the axis of the through hole.

4. Connector according to claim 3, wherein at least two elongate elements are arranged to each of the first and second connector bodies and wherein the elongate elements and the bushing and axle journal respectively are arranged in a single plane.

5. Table comprising:
- a table top;
- a connector according to any of the preceding claims,
- four elongate table legs and four elongate frame rods for supporting the table top,
wherein two elongate table legs and two elongate frame rods are arranged to the main body of the connector in an X-shape configuration,
wherein one elongate table leg and one elongate frame rod are arranged to the first connector body in a V-shaped configuration and in a single plane with the bushing, and
wherein one elongate table leg and one elongate frame rod are arranged to the second connector body in a V-shaped configuration and in a single plate with the axle journal, such that the assembly of connector, elongate table legs and elongate frame rods provide an X-shaped support for the table top.
